# EUROPÄISCHE PATENTSCHRIFT

(11) **EP 2 986 422 B1**
(45) Veröffentlichungstag und Bekanntmachung des Hinweises auf die Patenterteilung: **15.03.2023**
(21) Anmeldenummer: 14716607.8
(22) Anmeldetag: 11.04.2014
(51) Int. Cl.: B25J 9/04, B25J 9/00

(54) **INDUSTRIEROBOTER MIT EINER AN EINEM ARMAUSLEGER ANGEORDNETEN ANTRIEBSANORDNUNG**
INDUSTRIAL ROBOT WITH A DRIVE ARRANGEMENT ARRANGED ON AN ARM EXTENSION
ROBOT INDUSTRIEL ÉQUIPÉ D'UN SYSTÈME D'ENTRAÎNEMENT DISPOSÉ SUR UN AVANT-BRAS

(30) Priorität: 16.04.2013 DE 102013206791
(43) Veröffentlichungstag der Anmeldung: 24.02.2016
(73) Patentinhaber: KUKA Deutschland GmbH, 86165 Augsburg (DE)
(72) Erfinder: KRUMBACHER, Rainer, 87675 Rettenbach (DE); REEKERS, Andre, 86163 Augsburg (DE)
(74) Vertreter: Böss, Dieter Alexander
(86) Internationale Anmeldenummer: PCT/EP2014/057438
(87) Internationale Veröffentlichungsnummer: WO 2014/170237

(56) Entgegenhaltungen:
- EP-A1- 2 024 144
- US-A- 5 697 255
- US-B1- 6 250 174

## Beschreibung

Die Erfindung betrifft einen Industrieroboter gemäß dem Oberbegriff des Anspruchs 1.

Ein solcher Industrieroboter ist aus der US 6,250,174 B1 bekannt.

Aus der EP 2 024 144 B1 ist ein Industrieroboter bekannt, mit einer Roboterhand-Antriebsvorrichtung, die mehrere in einem Ausleger des Roboters angeordnete Antriebsmotoren mit Antriebswellen zum Antreiben einer Roboterhand des Auslegers aufweist, wobei wenigstens einer der Antriebsmotoren gegenüber wenigstens einem weiteren der Antriebsmotoren in axialer Richtung auf die Roboterhand nach vorne zu versetzt angeordnet ist und die Antriebswellen der Antriebsmotoren als parallel zueinander verlaufende Geradwellen ausgebildet sind, die vorne im Wesentlichen auf gleicher axialer Höhe enden, wobei drei Antriebswellen vorgesehen sind, die derart angeordnet sind, dass ein Abstand der Antriebswelle eines mittleren Antriebsmotors zu einer der Antriebswellen zweier seitlicher Antriebsmotoren geringer ist, als die Summe der Radien der Motorgehäuse eines benachbarten Paars der axial gegeneinander versetzten Antriebsmotoren.

Die US 6,250,174 B1 beschreibt einen Industrieroboter mit einem an einer Schwinge drehbar gelagerten Armausleger, in dessen Hohlraumgehäuse sowohl ein Armauslegerantrieb als auch zwei Handgliedantriebe eingeschlossen sind.

Die US 5,697,255 A beschreibt einen Roboter mit einem Gestell, einem an dem Gestell um eine vertikale Achse drehbar gelagerten Karussell und einer an dem Karussell montierten Schwinge, die um eine erste horizontale Achse schwenkbar ist. Der Roboter weist außerdem einen an der Schwinge gelagerten Armausleger auf, der um eine zweite horizontale Achse schwenkbar gelagert ist. Der Armausleger umfasst drei Antriebsmotoren für Handgelenke des Armauslegers, deren Motorachsen parallel zueinander ausgerichtet sind und einen weiteren Antriebsmotor zum Schwenken des Armauslegers bezüglich der Schwinge, dessen Motorwelle mit der zweiten horizontalen Achse fluchtet. Aufgabe der Erfindung ist es, einen Industrieroboter zu schaffen, der trotz kompakter Baugröße, einen großen Arbeitsbereich aufweist.

Die Aufgabe der Erfindung wird gelöst durch einen Industrieroboter gemäß Anspruch 1.

Vorzugsweise ist die die Motorwelle des zweiten Handglied-Antriebs senkrecht zur Drehachse ausgerichtet und beabstandet von der Drehachse verlaufend am Armausleger angeordnet.

Das Anordnen der Antriebe, das heißt des Armausleger-Antriebs, des ersten Handglied-Antriebs bzw. des zweiten Handglied-Antriebs, kann insbesondere durch ein Anflanschen der Antriebe erfolgen. Es versteht sich, daß im Folgenden der Begriff "Anflanschen" auch als "Anordnen", "Befestigen", insbesondere als "lösbares Befestigen" und bevorzugt auch als Befestigung mittels eines Flansches verstanden wird.

Industrieroboter sind Arbeitsmaschinen, die zur automatischen Handhabung und/ oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind.

Der Industrieroboter weist den Roboterarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Antriebe bewegt werden, in dem die Steuerung die Antriebe steuert bzw. regelt.

Roboterarme können unter Anderem ein Gestell und ein relativ zum Gestell mittels eines ersten Gelenks drehbar gelagertes Karussell umfassen, an dem eine Schwinge mittels eines anderen Gelenks schwenkbar gelagert ist. An der Schwinge ist dabei ihrerseits ein Armausleger mittels eines weiteren Gelenks schwenkbar gelagert. Der Armausleger trägt eine Roboterhand, wobei insoweit der Armausleger und/oder die Roboterhand mehrere weitere Gelenke aufweisen können. Je nach konstruktiver Ausführung des Roboterarms können die möglichen Drehbewegungen eines oder mehrerer Gelenke bzw. Roboterachsen mittels mechanischen Festanschlägen oder steuerungstechnisch mittels Softwareschalter begrenzt werden.

Der mehrere über Gelenke verbundene Glieder aufweisende Roboterarm kann als ein Knickarmroboter mit mehreren seriell nacheinander angeordneten Gliedern und Gelenken konfiguriert sein, insbesondere kann der Roboterarm als ein Sechsachs-Knickarmroboter ausgebildet sein.

Der Armausleger trägt wenigstens zwei Handglieder zum Bewegen eines Handflansches, die zur Befestigung beispielsweise eines Roboterwerkzeugs ausgebildet sind. In einer bevorzugten Ausführungsform trägt der Armausleger drei Handglieder, von denen beispielsweise ein erstes Handglied durch den Vorderarm gebildet wird, der mittels eines Gelenks bezüglich des Grundarms um eine in Längserstreckung des Armauslegers verlaufende Vorderarm-Achse drehbar ist, ein zweites Handglied durch einen Handkörper gebildet wird, der mittels eines folgenden Gelenks bezüglich des Vorderarms, insbesondere einer Vorderarmgabel um eine senkrecht zur Vorderarm-Achse verlaufende Handachse schwenkbar gelagert ist und ein drittes Handglied durch den Handflansch gebildet wird, der um eine Handflansch-Achse drehbar gelagert ist. Indem der Armausleger-Antrieb mit seiner Motorwelle in einem Abstand parallel versetzt zur Drehachse verlaufend ausgerichtet am Armausleger angeflanscht ist, wird in diesem Bereich Bauraum geschaffen, um zwei Handglied-Antriebe dort zumindest teilweise anordnen zu können. Durch eine solche Anordnung kann nahe dem Gelenk, welches den Armausleger schwenkbar mit der Schwinge verbindet, die wesentlichen Antriebe untergebracht werden, ohne dass die Antriebsgehäuse weit über die Kontur des Roboterarms vorstehen. Dadurch, dass die Antriebsgehäuse dann nicht mehr weit über die Kontur des Roboterarms vorstehen, kann beispielsweise die Schwinge sehr kurz und/oder kompakt ausgeführt werden, ohne dass die Gefahr besteht, dass der Armausleger nicht mehr in eine Überkopfstellung geschwenkt werden könnte, weil eventuell zu weit überstehende Antriebsgehäuse beispielsweise mit dem Karussell kollidieren könnte.

Indem sowohl der erste Handglied-Antrieb, als bevorzugt auch der zweite Handglied-Antrieb mit ihren jeweiligen Motorwellen parallel in einem Abstand zueinander verlaufend und senkrecht zur Drehachse ausgerichtet in jeweiligen Abständen von der Drehachse verlaufend am Armausleger angeflanscht sind, kann der durch die axiale Länge des Armausleger-Antriebs geschaffene, sich in axialer Richtung der Drehachse erstreckender Konturbereich für eine Anordnung, bei zwei oder mehreren Handglied-Antrieben nebeneinander liegende Anordnung der beiden oder mehreren Handglied-Antriebe, genutzt werden, wodurch beispielsweise die in einer Grundstellung des Roboterarms sich ergebende Bauhöhe des Armauslegers sehr kompakt ist.

Als Grundstellung des Roboterarms kann eine Pose des Roboterarms verstanden werden, bei der in einer Bodenmontage des Industrieroboters die Schwinge mit ihrer Längserstreckung vertikal nach oben ausgerichtet angeordnet ist, der Armausleger in einem rechten Winkel zur Schwinge angeordnet ist, und insoweit horizontal ausgerichtet ist. In allen Ausführungsformen kann der Armausleger an lediglich einer Seite der Schwinge gelagert sein.

Generell können der erste Handglied-Antrieb und/oder der zweite Handglied-Antrieb mit ihren jeweiligen Motorwellen in demselben Abstand von der Drehachse verlaufend am Armausleger angeordnet bzw. angeflanscht sein.

Dabei können der erste Handglied-Antrieb und/oder der zweite Handglied-Antrieb auf derselben Seite der Drehachse angeordnet sein. Dies ermöglicht auf einer der Drehachse dem einen bzw. den beiden Handglied-Antrieben gegenüberliegenden Seite auf Höhe des zwischen Armausleger und Schwinge liegenden Gelenk des Roboterarms Platz zu schaffen, um dort den Armausleger-Antrieb an den Armausleger anordnen bzw. anflanschen zu können. Der Armausleger-Antrieb ist dann insoweit bezüglich der Drehachse den Handglied-Antrieben gegenüberliegend angeordnet. Die Drehachse bezieht sich auf das Gelenk, welches den Armausleger mit der Schwinge drehbar verbindet.

Erfindungsgemäß sind der erste Handglied-Antrieb und vorzugsweise der zweite Handglied-Antrieb mit ihren jeweiligen Motorwellen in einer Richtung von der Drehachse beabstandet am Armausleger angeordnet bzw. angeflanscht, die entgegen derjenigen Richtung ausgerichtet ist, mit welcher die Motorwelle des Armausleger-Antriebs in einem Abstand parallel versetzt zur Drehachse verlaufend ausgerichtet am Armausleger angeordnet bzw. angeflanscht ist.

Im Allgemeinen weist die Schwinge ein zweites Schwingengelenk auf, das einem die Drehachse aufweisenden ersten Schwingengelenk der Schwinge gegenüberliegt bzw. entgegengesetzt angeordnet bzw. ausgebildet sein kann. Mit anderen Worten können die Schwingengelenke an zueinander distalen Enden bzw. Endbereichen der Schwinge angeordnet bzw. ausgebildet sein. In diesem Fall kann vorgesehen sein, dass in einer Grundstellung des Industrieroboters, in welcher der Armausleger mit seiner Längserstreckung in einem rechten Winkel zur Längserstreckung der Schwinge ausgerichtet ist, der erste Handglied-Antrieb und/oder der zweite Handglied-Antrieb mit ihren jeweiligen Motorwellen von der Drehachse weg, in Richtung des zweiten Schwingengelenks zu versetzt am Armausleger angeflanscht sind.

Unter einer Grundstellung kann diejenige Pose des Roboterarms verstanden werden, in welcher auch eine Justage der Gelenke des Industrieroboters durchgeführt wird. Für eine solche Justage weist ein Industrieroboter üblicher Weise an jedem Gelenk miteinander fluchtende Justagemerkmale auf, wie beispielsweise Kerben in den Armgehäusen oder Justagebohrungen, in denen Justagewerkzeugsensoren eingesetzt werden können.

Eine mit ihren jeweiligen Motorwellen von der Drehachse weg, in Richtung des zweiten Schwingengelenks zu versetzt am Armausleger angeordnete bzw. angeflanschte Lage des ersten Handglied-Antriebs und/oder des zweiten Handglied-Antriebs wird unter Anderem auch als ein negativer Versatz (Offset) bezeichnet.

Alternativ oder ergänzend kann die Schwinge ein zweites Schwingengelenk aufweisen, das einem die Drehachse aufweisenden ersten Schwingengelenk der Schwinge gegenüberliegt und in einer Grundstellung des Industrieroboters, in welcher der Armausleger mit seiner Längserstreckung in einem rechten Winkel zur Längserstreckung der Schwinge ausgerichtet ist, der Armausleger-Antrieb mit seiner Motorwelle von der Drehachse weg, in einer von dem zweiten Schwingengelenk wegweisenden Richtung am Armausleger angeordnet bzw. angeflanscht ist.

Auch hierbei kann unter einer Grundstellung diejenige Pose des Roboterarms verstanden werden, in welcher auch eine Justage der Gelenke des Industrieroboters durchgeführt wird. Für eine solche Justage weist ein Industrieroboter üblicher Weise an jedem Gelenk miteinander fluchtende Justagemerkmale auf, wie beispielsweise Kerben in den Armgehäusen oder Justagebohrungen, in denen Justagewerkzeugsensoren eingesetzt werden können.

Eine mit seiner Motorwelle von der Drehachse weg, in einer von dem zweiten Schwingengelenk wegweisenden Richtung am Armausleger angeflanschte Lage des Armausleger-Antriebs wird unter anderem auch als ein positiver Versatz (Offset) bezeichnet.

Der erste Handglied-Antrieb und der zweite Handglied-Antrieb sind mit ihren jeweiligen Motorwellen in derselben Ebene liegend am Armausleger angeordnet.

Der erste Handglied-Antrieb und der zweite Handglied-Antrieb sind mit ihren jeweiligen Motorwellen in einer Ebene liegend am Armausleger angeflanscht, die sich parallel zur Drehachse erstreckt.

Die Motorwelle des Armausleger-Antriebs kann generell an eine Stirnradstufe eines Getriebes angekoppelt sein, das ausgebildet ist, das den Armausleger mit der Schwinge schwenkbar verbindende Gelenk zu bewegen. Alternativ oder ergänzend zu einer Stirnradstufe kann die Motorwelle des Armausleger-Antriebs auch an einen Riementrieb eines Getriebes angekoppelt sein, das ausgebildet ist, das den Armausleger mit der Schwinge schwenkbar verbindende Gelenk zu bewegen.

Mittels einer Stirnradstufe und/oder eines Riementriebs kann ein Drehmoment über die exzentrisch, d.h. versetzt zur Drehachse angeordnete Motorwelle des Armausleger-Antriebs in ein Getriebe eingeleitet werden, das insbesondere konzentrisch zur Drehachse am dem Armausleger bzw. der Schwinge montiert ist.

In allen Ausführungen kann der Armausleger einen dritten Handglied-Antrieb aufweisen, der mit seiner Motorwelle parallel zu den Motorwellen des ersten Handglied-Antriebs und/oder des zweiten Handglied-Antriebs ausgerichtet und mit seinem Antriebsgehäuse bezüglich der Antriebsgehäuse des ersten Handglied-Antriebs und/oder des zweiten Handglied-Antriebs nach vorne auf eine Hand des Armauslegers zu versetzt am oder im Armausleger angeflanscht ist.

In einer solchen Ausführungsform trägt der Armausleger drei Handglieder, von denen beispielsweise ein erstes Handglied durch den Vorderarm gebildet wird, der mittels eines Gelenks bezüglich des Grundarms um eine in Längserstreckung des Armauslegers verlaufende Vorderarm-Achse drehbar ist, ein zweites Handglied durch einen Handkörper gebildet wird, der mittels eines folgenden Gelenks bezüglich des Vorderarms, insbesondere einer Vorderarmgabel um eine senkrecht zur Vorderarm-Achse verlaufende Handachse schwenkbar gelagert ist und ein drittes Handglied durch den Handflansch gebildet wird, der um eine Handflansch-Achse drehbar gelagert ist.

In allen geeigneten Ausführungen kann der Armausleger-Antrieb derart ausgebildet sein und/oder am Armausleger derart angeflanscht sein, dass ein dem Motorwellenausgang gegenüberliegendes axiales Stirnende des Armausleger-Antriebs in axialer Richtung der Drehachse des ersten Gelenks der Schwinge weniger weit vorsteht, als der äußere der beiden nebeneinander angeordneten Antriebe von erstem Handglied-Antrieb und zweitem Handglied-Antrieb.

Indem der Armausleger-Antrieb derart ausgebildet ist und/oder derart am Armausleger derart angeordnet bzw. angeflanscht ist, dass ein dem Motorwellenausgang gegenüberliegendes axiales Stirnende des Armausleger-Antriebs in axialer Richtung der Drehachse des ersten Gelenks der Schwinge weniger weit vorsteht, als der äußere der beiden nebeneinander angeordneten Antriebe von erstem Handglied-Antrieb und zweitem Handglied-Antrieb, wird die durch die beiden Handglied-Antriebe vorgegebene Störkontur, in axialer Richtung der Drehachse betrachtet, durch den Armausleger-Antrieb nicht in negativer Weise vergrößert. Mit anderen Worten bleibt die durch die beiden Handglied-Antriebe vorgegeben Breite des Roboterarms im Bereich des Gelenks, welches den Armausleger mit Schwinge verbindet, erhalten. Der Armausleger-Antrieb soll in dieser Ausführungsform also derart ausgebildet oder angeflanscht sein, dass die Länge des Armausleger-Antriebs die Breite des Roboterarms im Bereich des Gelenks, welches den Armausleger mit Schwinge verbindet, nicht vergrößert. Dies hat den Vorteil, dass die Störkontur in diesem Bereich des Gelenks klein bleibt.

Ein Ausführungsbeispiel der Erfindung ist exemplarisch in den beigefügten schematischen Zeichnungen dargestellt. Es zeigen:
- Fig. 1: eine perspektivische Ansicht eines Industrieroboters mit einem erfindungsgemäßen Armausleger in einer Ansicht von schräg vorne,
- Fig. 2: eine perspektivische Ansicht des Industrieroboters gemäß Fig. 1 mit dem Armausleger in einer Ansicht von schräg hinten,
- Fig. 3: eine vergrößerte perspektivische Ansicht einer erfindungsgemäßen Anordnung von Antrieben des Armauslegers gemäß Fig. 2,
- Fig. 4: eine rückwärtige Ansicht der Anordnung von Antrieben des Armauslegers gemäß Fig. 3, und
- Fig. 5: eine seitliche Ansicht der Anordnung von Antrieben des Armauslegers gemäß Fig. 3.

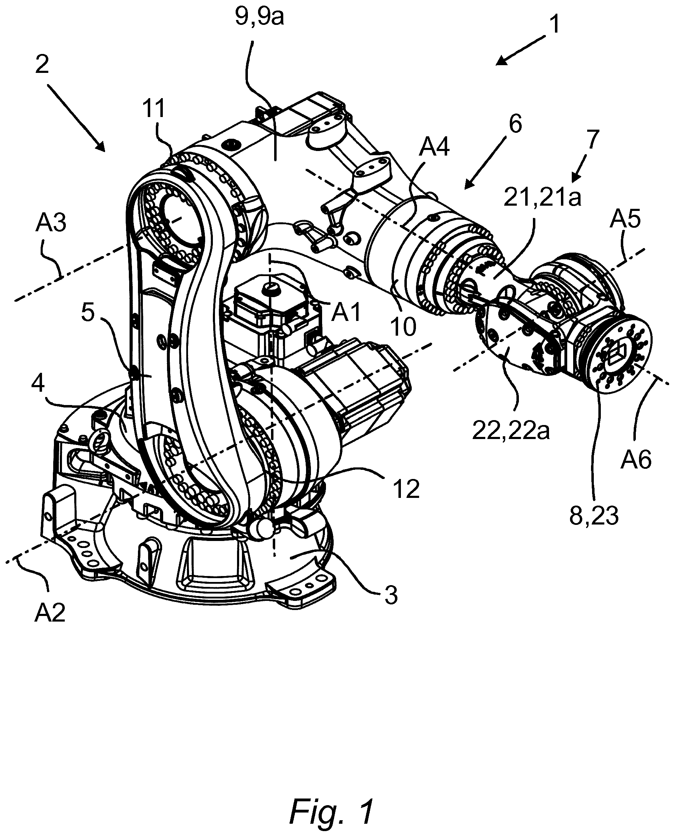

Die Fig. 1 zeigt einen Industrieroboter 1, der einen Roboterarm 2 aufweist. Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende, d.h. an einem zweiten Schwingengelenk 12 der Schwinge 5, das auch als Schwingenlagerkopf bezeichnet werden kann, auf dem Karussell 4 um eine vorzugsweise horizontale Drehachse A2 schwenkbar gelagert. Am oberen Ende der Schwinge 5 ist an einem ersten Schwingengelenk 11 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes Armgehäuse 9 auf. An dem Armgehäuse 9 ist ein Handgrundgehäuse 10 des Armauslegers 6 um die Achse A4 drehbar gelagert.

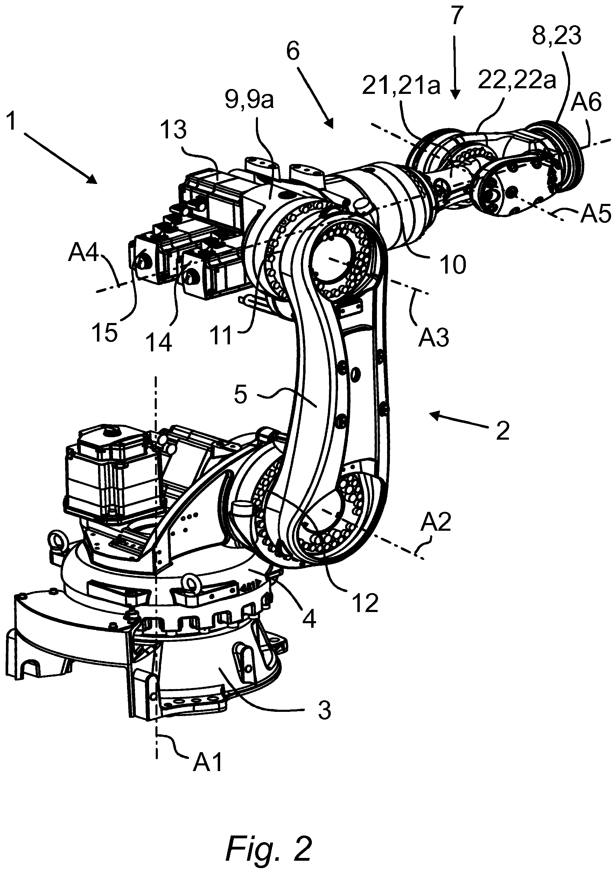

In dieser in der Fig. 1 und Fig. 2 gezeigten Ausführungsform trägt der Armausleger 6 drei Handglieder, von denen ein erstes Handglied 21 durch den Vorderarm 21a gebildet wird, der mittels eines Gelenks bezüglich des Grundarms 9a um eine in Längserstreckung des Armauslegers 6 verlaufende Vorderarm-Achse (A4) drehbar ist, ein zweites Handglied 22 durch einen Handkörper 22a gebildet wird, der mittels eines folgenden Gelenks bezüglich des Vorderarms 21a, insbesondere einer Vorderarmgabel um eine senkrecht zur Vorderarm-Achse (A4) verlaufende Handachse (A5) schwenkbar gelagert ist und ein drittes Handglied 23 durch den Flansch 8 gebildet wird, der um eine Handflansch-Achse (A6) drehbar gelagert ist.

Als Grundstellung des Roboterarms 2 kann die in den Figuren 1 und 2 gezeigte Pose des Roboterarms 2 verstanden werden. In dieser Pose ist bei der dargestellten Bodenmontage des Industrieroboters 1 die Schwinge 5 mit ihrer Längserstreckung vertikal nach oben ausgerichtet angeordnet und der Armausleger 6 ist in einem rechten Winkel zur Schwinge 5 angeordnet und insoweit horizontal ausgerichtet.

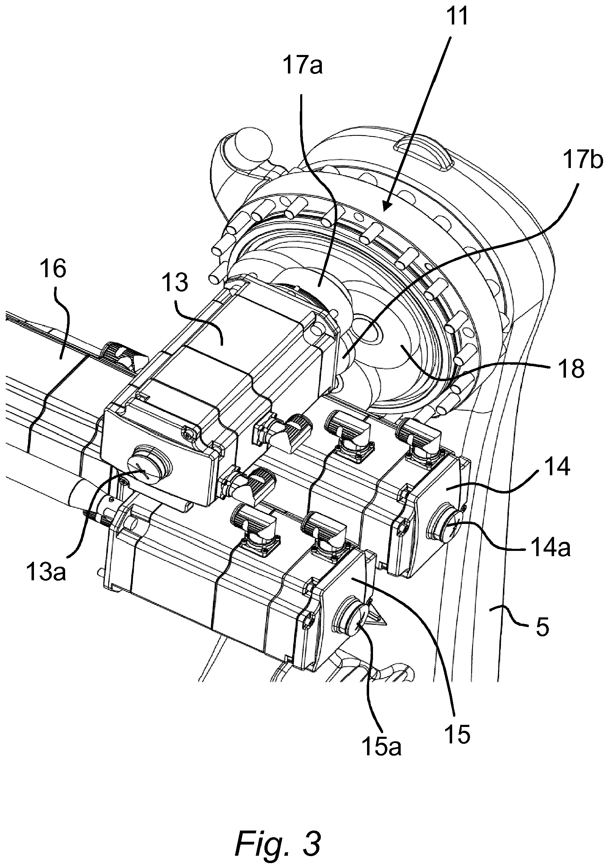

Wie in Fig. 3 zur besseren Darstellung ohne Armgehäuse gezeigt, weist der Roboterarm 2 einen am Armausleger 6 angeflanschten Armausleger-Antrieb 13 auf, der ausgebildet ist, den Armausleger 6 bezüglich der Schwinge 5 zu schwenken.

Der Roboterarm 2 weist außerdem einen am Armausleger 6 angeflanschten ersten Handglied-Antrieb 14 auf, der ausgebildet ist, eines der Handglieder 21, 22, 23 bezüglich des Armauslegers 6 zu bewegen, und einen am Armausleger 6 angeflanschten zweiten Handglied-Antrieb 15 auf, der ausgebildet ist, ein anderes der Handglieder 21, 22, 23 bezüglich des Armauslegers 6 und/oder bezüglich des einen Handglieds 21 oder 22 zu bewegen.

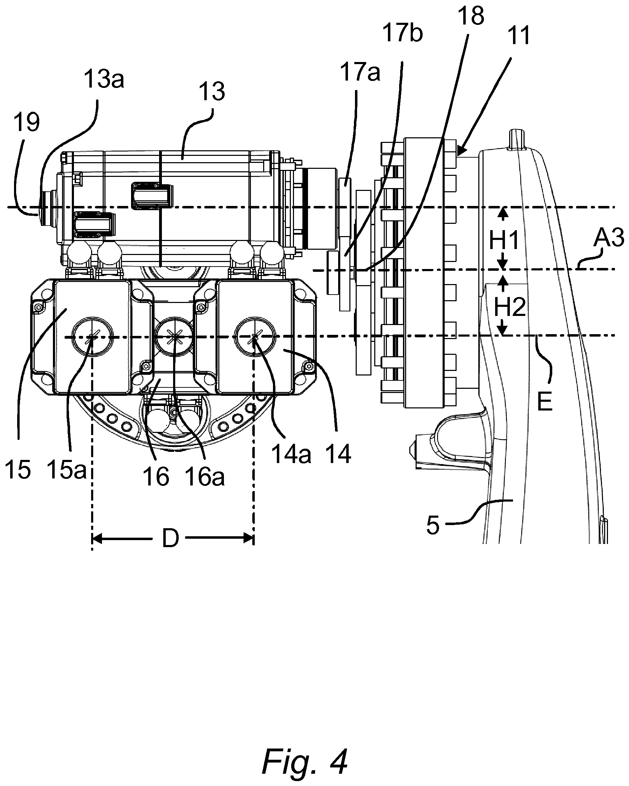

Wie insbesondere in Fig. 4 zu erkennen, ist der Armausleger-Antrieb 13 mit seiner Motorwelle 13a in einem Abstand H1 parallel versetzt zur Drehachse A3 verlaufend ausgerichtet am Armausleger 6 angeflanscht. Außerdem sind sowohl der erste Handglied-Antrieb 14, als auch der zweite Handglied-Antrieb 15 mit ihren jeweiligen Motorwellen 14a, 15a parallel in einem Abstand D zueinander verlaufend und senkrecht zur Drehachse A3 ausgerichtet in jeweiligen Abständen H2 von der Drehachse A3 verlaufend am Armausleger 6 angeflanscht.

Der erste Handglied-Antrieb 14 und der zweite Handglied-Antrieb 15 sind dabei im argestellten Ausführungsbeispiel mit ihren jeweiligen Motorwellen 14a, 15a in demselben Abstand H2 von der Drehachse A3 verlaufend am Armausleger 6 angeflanscht.

Der erste Handglied-Antrieb 14 und der zweite Handglied-Antrieb 15 sind mit ihren jeweiligen Motorwellen 14a, 15a in einer Richtung von der Drehachse A3 beabstandet am Armausleger 6 angeflanscht, die entgegen derjenigen Richtung ausgerichtet ist, mit welcher die Motorwelle 13a des Armausleger-Antriebs 13 in einem Abstand H1 parallel versetzt zur Drehachse A3 verlaufend ausgerichtet am Armausleger 6 angeflanscht ist.

Der erste Handglied-Antrieb 14 und der zweite Handglied-Antrieb 15 sind mit ihren jeweiligen Motorwellen 14a, 15a in derselben Ebene E liegend am Armausleger 6 angeflanscht. Die Ebene E erstreckt sich dabei parallel zur Drehachse A3.

Zurückkommend auf die Fig. 2 ist am dortigen Ausführungsbeispiel dargestellt, dass die Schwinge 5 ein zweites Schwingengelenk 12 aufweist, das dem die Drehachse A3 aufweisenden ersten Schwingengelenk 11 der Schwinge 5 gegenüberliegt bzw. davon an einem entgegengesetzten Ende der Schwinge 5 angeordnet ist. In der gezeigten Grundstellung des Industrieroboters 1, in welcher der Armausleger 6 mit seiner Längserstreckung in einem rechten Winkel zur Längserstreckung der Schwinge 5 ausgerichtet ist, der erste Handglied-Antrieb 14 und der zweite Handglied-Antrieb 15 mit ihren jeweiligen Motorwellen 14a, 15a von der Drehachse A3 weg, in Richtung des zweiten Gelenks 12 zu versetzt am Armausleger 6 angeflanscht sind. Außerdem ist dabei der Armausleger-Antrieb 13 mit seiner Motorwelle 13a von der Drehachse A3 weg, in einer von dem zweiten Schwingengelenk 12 wegweisenden Richtung am Armausleger 6 angeflanscht.

In den Figuren 3 und 4 ist dargestellt, wie die Motorwelle 13a des Armausleger-Antriebs 13 an eine beispielhafte Stirnradstufe 17a, 17b eines Getriebes 18 angekoppelt ist, das ausgebildet ist, das den Armausleger 6 mit der Schwinge 5 schwenkbar verbindende Schwingengelenk 11 zu bewegen.

Mittels der Stirnradstufe 17a, 17b kann ein Drehmoment über die exzentrisch, d.h. versetzt zur Drehachse A3 angeordnete Motorwelle 13a des Armausleger-Antriebs 13 in das Getriebe 18 eingeleitet werden, das im dargestellten Ausführungsbeispiel konzentrisch zur Drehachse A3 an der Schwinge 5 montiert ist.

Wie in Fig. 3 außerdem zu sehen ist, weist der Armausleger 6 einen dritten Handglied-Antrieb 16 auf, der mit seiner Motorwelle 16a (Fig.4) parallel zu den Motorwellen 14a, 15a des ersten Handglied-Antriebs 14 und des zweiten Handglied-Antriebs 15 ausgerichtet und mit seinem Antriebsgehäuse bezüglich der Antriebsgehäuse des ersten Handglied-Antriebs 14 und des zweiten Handglied-Antriebs 15 nach vorne auf eine Hand des Armauslegers 6 zu versetzt am oder im Armausleger 6 angeflanscht ist.

Der Armausleger-Antrieb 13 ist derart ausgebildet bzw. derart am Armausleger 6 angeflanscht, dass ein dem Motorwellenausgang gegenüberliegendes bzw. entgegengesetztes axiales Stirnende 19 des Armausleger-Antriebs 13 in axialer Richtung der Drehachse A3 des ersten Gelenks 11 der Schwinge 5 weniger weit vorsteht, als der äußere, d.h. im dargestellten Ausführungsbeispiel der zweite Handglied-Antrieb 15.

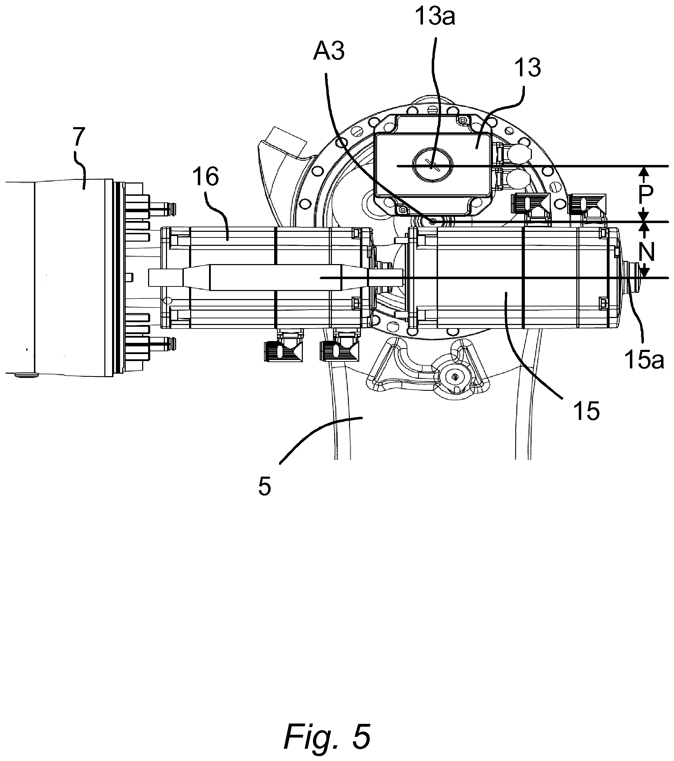

Außer durch die Fig. 4 ist außerdem durch die Fig. 5 gezeigt, wie die mit ihren jeweiligen Motorwellen 14a, 15a von der Drehachse A3 weg, in Richtung des zweiten Gelenks 12 zu versetzt am Armausleger 6 angeflanschte Lage des ersten Handglied-Antriebs 14 und des zweiten Handglied-Antriebs 15 einen negativen Versatz, d.h. Offset N darstellen.

Außer durch die Fig. 4 ist außerdem durch die Fig. 5 gezeigt, wie die mit seiner Motorwelle 13a von der Drehachse A3 weg, in einer von dem zweiten Schwingengelenk 12 wegweisenden Richtung am Armausleger 6 angeflanschte Lage des Armausleger-Antriebs 13 einen positiven Versatz, d.h. Offset P darstellt.

## Patentansprüche

1. Industrieroboter (1), aufweisend
einen Roboterarm (2), der mehrere über Gelenke verbundene Glieder aufweist, von denen ein Glied als eine Schwinge (5) ausgebildet ist und von denen ein anderes Glied als ein Armausleger (6) ausgebildet ist, der mittels eines der Gelenke um eine Drehachse (A3) schwenkbar an einer Seite der Schwinge (5) gelagert ist und wenigstens zwei weitere der Glieder trägt, die Handglieder des Roboterarms (2) bilden,
des Weiteren aufweisend einen am Armausleger (6) angeordneten Armausleger-Antrieb (13) mit einer Motorwelle (13a), der ausgebildet ist, den Armausleger (6) bezüglich der Schwinge (5) zu schwenken,
einen am Armausleger (6) angeordneten ersten Handglied-Antrieb (14) mit einer Motorwelle (14a), der ausgebildet ist, eines der Handglieder (21, 22, 23) bezüglich des Armauslegers (6) zu bewegen, vorzugsweise einen am Armausleger (4) angeordneten zweiten Handglied-Antrieb (15) mit einer Motorwelle (15a), der ausgebildet ist, ein anderes der Handglieder (21, 22, 23) bezüglich des Armauslegers (4) und/oder bezüglich des einen Handglieds (21,22) zu bewegen,
wobei die Motorwelle (13a) des Armausleger-Antriebs (13) in einem Abstand parallel versetzt zur Drehachse (A3) verlaufend ausgerichtet am Armausleger (6) angeordnet ist, und wobei
die Motorwelle (14a) des ersten Handglied-Antriebs (14) senkrecht zur Drehachse (A3) ausgerichtet und beabstandet von der Drehachse (A3) verlaufend am Armausleger (6) angeordnet ist, **dadurch gekennzeichnet, dass** der erste Handglied-Antrieb (14) und vorzugsweise der zweite Handglied-Antrieb (15) mit ihren jeweiligen Motorwellen (14a, 15a) in einer Richtung von der Drehachse (A3) beabstandet am Armausleger (6) angeordnet sind, die entgegen derjenigen Richtung orientiert ist, mit welcher die Motorwelle (13a) des Armausleger-Antriebs (13) in einem Abstand parallel versetzt zur Drehachse (A3) verlaufend ausgerichtet am Armausleger (6) angeordnet ist.

2. Industrieroboter nach Anspruch 1, bei dem die Motorwelle (15a) des zweiten Handglied-Antriebs (15) senkrecht zur Drehachse (A3) ausgerichtet und beabstandet von der Drehachse (A3) verlaufend am Armausleger (6) angeordnet ist.

3. Industrieroboter nach Anspruch 1 oder 2, bei dem der erste Handglied-Antrieb (14) und/oder der zweite Handglied-Antrieb (15) mit ihren jeweiligen Motorwellen (14a, 15a) in demselben Abstand von der Drehachse (A3) verlaufend am Armausleger (6) angeordnet sind.

4. Industrieroboter nach einem der Ansprüche 1 bis 3, bei dem die Schwinge (5) ein zweites Schwingengelenk (12) aufweist, das entgegengesetzt von einem die Drehachse (A3) aufweisenden ersten Schwingengelenk (11) der Schwinge (5) angeordnet ist und das in einer Grundstellung des Industrieroboters (1), in welcher der Armausleger (6) mit seiner Längserstreckung in einem rechten Winkel zur Längserstreckung der Schwinge (5) ausgerichtet ist, der erste Handglied-Antrieb (14) und/oder der zweite Handglied-Antrieb (15) mit ihren jeweiligen Motorwellen (14a, 15a) von der Drehachse (A3) weg, in Richtung des zweiten Schwingengelenks (12) zu versetzt am Armausleger (6) angeordnet sind.

5. Industrieroboter nach einem der Ansprüche 1 bis 4, bei dem die Schwinge (5) ein zweites Schwingengelenk (12) aufweist, das entgegengesetzt von einem die Drehachse (A3) aufweisenden ersten Schwingengelenk (11) der Schwinge (5) angeordnet ist und das in einer Grundstellung des Industrieroboters (1), in welcher der Armausleger (6) mit seiner Längserstreckung in einem rechten Winkel zur Längserstreckung der Schwinge (5) ausgerichtet ist, der Armausleger-Antrieb (13) mit seiner Motorwelle (13a) von der Drehachse (A3) weg, in einer von dem zweiten Schwingengelenk (12) wegweisenden Richtung am Armausleger (6) angeordnet ist.

6. Industrieroboter nach einem der vorigen Ansprüche, bei dem der erste Handglied-Antrieb (14) und der zweite Handglied-Antrieb (15) mit ihren jeweiligen Motorwellen (14a, 15a) in derselben Ebene liegend am Armausleger (6) angeordnet sind.

7. Industrieroboter nach Anspruch 6, bei dem der erste Handglied-Antrieb (14) und der zweite Handglied-Antrieb (15) mit ihren jeweiligen Motorwellen (14a, 15a) in einer Ebene liegend am Armausleger (6) angeflanscht sind, die sich parallel zur Drehachse (A3) erstreckt.

8. Industrieroboter nach einem der vorigen Ansprüche, bei dem die Motorwelle (13a) des Armausleger-Antriebs (13) an eine Stirnradstufe (17a, 17b) und/oder einen Riementrieb eines Getriebes (18) angekoppelt ist, das ausgebildet ist, das den Armausleger (6) mit der Schwinge (5) schwenkbar verbindende erste Schwingengelenk (11) zu bewegen.

9. Industrieroboter nach einem der vorigen Ansprüche, bei dem der Armausleger (6) einen dritten Handglied-Antrieb (16) aufweist, der mit seiner Motorwelle (16a) parallel zu den Motorwellen (14a, 15a) des ersten Handglied-Antriebs (14) und des zweiten Handglied-Antriebs (15) ausgerichtet und mit seinem Antriebsgehäuse bezüglich der Antriebsgehäuse des ersten Handglied-Antriebs (14) und des zweiten Handglied-Antriebs (15) nach vorne auf eine Hand des Armauslegers (6) zu versetzt am oder im Armausleger (6) angeordnet ist.

10. Industrieroboter nach einem der vorigen Ansprüche, bei dem der Armausleger-Antrieb (13) derart ausgebildet ist und/oder am Armausleger (6) derart angeordnet ist, dass ein dem Motorwellenausgang gegenüberliegendes axiales Stirnende (19) des Armausleger-Antriebs (13) in axialer Richtung der Drehachse (A3) des ersten Schwingengelenks (11) der Schwinge (5) weniger weit vorsteht, als der äußere der beiden nebeneinander angeordneten Antriebe von erstem Handglied-Antrieb (14) und/oder zweitem Handglied-Antrieb (15).

## Claims

1. An industrial robot (1) comprising a robot arm (2) having a plurality of links connected by joints, one of said links being formed as a swing (5) and another of said links being formed as an arm cantilever (6) pivotally supported on one side of said swing (5) by means of one of said joints about an axis of rotation (A3) and carrying at least two more of said links forming hand links of said robot arm (2),
further comprising an arm cantilever drive (13) with a motor shaft (13a) arranged on the arm cantilever (6) and adapted to pivot the arm cantilever (6) with respect to the swing (5),
a first hand link drive (14) with a motor shaft (14a) arranged on the arm cantilever (6) and adapted to move one of the hand links (21, 22, 23) with respect to the arm cantilever (6), preferably a second hand link drive (15) arranged on the arm cantilever (6) with a motor shaft (15a) and adapted to move another one of the hand links (21, 22, 23) with respect to the arm cantilever (6) and/or with respect to the one hand link (21, 22), wherein
the motor shaft (13a) of the arm cantilever drive (13) is arranged on the arm cantilever (6) aligned at a distance offset parallel to the axis of rotation (A3), and wherein
the motor shaft (14a) of the first hand link drive (14) is arranged on the arm cantilever (6) aligned perpendicular to the axis of rotation (A3) at a distance from the axis of rotation (A3), **characterized in that** the first hand link drive (14) and preferably the second hand link drive (15) with their respective motor shafts (14a, 15a) are arranged on the arm cantilever (6) at a distance from the axis of rotation (A3), which is oriented opposite to the direction with which the motor shaft (13a) of the arm cantilever drive (13) is arranged on the arm cantilever (6) aligned at a distance offset parallel to the axis of rotation (A3).

2. Industrial robot according to claim 1, wherein the motor shaft (15a) of the second hand link drive (15) is arranged on the arm cantilever (6) aligned perpendicular to the axis of rotation (A3) at a distance from the axis of rotation (A3).

3. Industrial robot according to claim 1 or 2, wherein the first hand link drive (14) and/or the second hand link drive (15) are arranged on the arm cantilever (6) with their respective motor shafts (14a, 15a) extending at the same distance from the axis of rotation (A3).

4. Industrial robot according to any one of claims 1 to 3, wherein the swing (5) has a second swing joint (12) which is arranged opposite a first swing joint (11) of the swing (5) having the axis of rotation (A3) and in a basic position of the industrial robot (1), in which the arm cantilever (6) is aligned with its longitudinal extension at a right angle to the longitudinal extension of the swing (5), the first hand link drive (14) and/or the second hand link drive (15) are arranged on the arm cantilever (6) with their respective motor shafts (14a, 15a) offset away from the axis of rotation (A3) in the direction of the second swing joint (12).

5. Industrial robot according to any one of claims 1 to 4, wherein the swing (5) has a second swing joint (12) which is arranged opposite a first swing joint (11) of the swing (5) having the axis of rotation (A3) and which, in a basic position of the industrial robot (1), in which the arm cantilever (6) is aligned with its longitudinal extension at a right angle to the longitudinal extension of the swing (5), the arm cantilever drive (13) is arranged on the arm cantilever (6) with its motor shaft (13a) pointing away from the axis of rotation (A3) in a direction pointing away from the second swing joint (12).

6. Industrial robot according to any one of the preceding claims, wherein the first hand link drive (14) and the second hand link drive (15) are arranged on the arm cantilever (6) with their respective motor shafts (14a, 15a) lying in the same plane.

7. Industrial robot according to claim 6, wherein the first hand link drive (14) and the second hand link drive (15) are flanged to the arm cantilever (6) with their respective motor shafts (14a, 15a) lying in a plane extending parallel to the axis of rotation (A3).

8. Industrial robot according to any one of the preceding claims, wherein the motor shaft (13a) of the arm cantilever drive (13) is coupled to a spur gear stage (17a, 17b) and/or a belt drive of a transmission (18) configured to move the first swing joint (11) pivotally connecting the arm cantilever (6) to the swing arm (5).

9. Industrial robot according to any one of the preceding claims, wherein the arm cantilever (6) comprises a third hand link drive (16) having its motor shaft (16a) aligned parallel to the motor shafts (14a, 15a) of the first hand link drive (14) and of the second hand link drive (15) and is arranged with its drive housing offset forwards with respect to the drive housings of the first hand link drive (14) and of the second hand link drive (15) towards a hand of the arm cantilever (6) on or in the arm cantilever (6).

10. Industrial robot according to one of the preceding claims, wherein the arm cantilever drive (13) is designed and/or arranged on the arm cantilever (6) in such a way, that an axial end face (19) of the arm cantilever drive (13) opposite the motor shaft output projects less far in the axial direction of the axis of rotation (A3) of the first swing joint (11) of the swing (5) than the outer one of the two drives of the first hand link drive (14) and/or second hand link drive (15) arranged next to one another.

## Revendications

1. Robot industriel (1) présentant
un bras de robot (2) qui présente plusieurs membres reliés par des articulations, dont un membre est réalisé sous la forme d'un bras oscillant (5) et dont un autre membre est réalisé sous la forme d'une flèche de bras (6) qui est montée pivotante autour d'un axe de rotation (A3) sur un côté du bras oscillant (5) au moyen d'une des articulations et qui porte au moins deux autres des membres qui forment les membres de main du bras de robot (2),
présentant en outre un entraînement de flèche de bras (13) disposé sur la flèche de bras (6), avec un arbre de moteur (13a), qui est réalisé pour faire pivoter la flèche de bras (6) par rapport au bras oscillant (5), un premier entraînement de membre de main (14) disposé sur la flèche de bras (6), avec un arbre de moteur (14a), qui est réalisé pour déplacer un des membres de main (21, 22, 23) par rapport à la flèche de bras (6),
de préférence un deuxième entraînement de membre de main (15) disposé sur le bras (6), avec un arbre moteur (15a), qui est réalisé pour déplacer un autre des membres de main (21, 22, 23) par rapport à la flèche de bras (6) et/ou par rapport audit un membre de main (21, 22),
l'arbre moteur (13a) de l'entraînement de flèche de bras (13) étant disposé sur la flèche de bras (6) en étant orienté parallèlement à distance dans l'alignement de l'axe de rotation (A3), et
l'arbre moteur (14a) du premier entraînement de membre de main (14) étant orienté perpendiculairement à l'axe de rotation (A3) et disposé sur la flèche de bras (6) à distance dans l'alignement de l'axe de rotation (A3), **caractérisé en ce que** le premier entraînement de membre de main (14) et de préférence le deuxième entraînement de membre de main (15) sont disposés sur la flèche de bras (6) avec leurs arbres moteurs (14a, 15a) respectifs dans une direction s'étendant à distance de l'axe de l'articulation qui est orientée dans la direction opposée à celle avec laquelle l'arbre moteur (13a) de l'entraînement de la flèche de bras (13) est disposé sur la flèche de bras (6) en étant décalé à distance parallèlement à l'axe de rotation (A3) et dans l'alignement de celui-ci.

2. Robot industriel selon la revendication 1, dans lequel l'arbre moteur (15a) du deuxième entraînement de membre de main (15) est orienté perpendiculairement à l'axe de rotation (A 3) et est disposé sur la flèche de bras (6) en s'étendant à distance dans l'alignement de l'axe de rotation (A 3).

3. Robot industriel selon la revendication 1 ou 2, dans lequel le premier entraînement de membre de main (14) et/ou le deuxième entraînement de membre de main (15) sont disposés avec leurs arbres de moteur (14a, 15a) respectifs sur la flèche de bras (6) en s'étendant dans l'alignement et à la même distance de l'axe de rotation (A3) .

4. Robot industriel selon l'une des revendications 1 à 3, dans lequel le bras oscillant (5) présente une deuxième articulation oscillante (12) qui est disposée à l'opposé d'une première articulation oscillante (11) du bras oscillant (5) présentant l'axe de rotation (A3) et qui, dans une position de base du robot industriel (1) dans laquelle la flèche de bras (6) est orientée avec son extension longitudinale à angle droit par rapport à l'extension longitudinale du bras oscillant (5), le premier entraînement de membre de main (14) et/ou le deuxième entraînement de membre de main (15) sont disposés sur la flèche de bras (6) avec leurs arbres de moteur (14a, 15a) respectifs décalés en éloignement de l'axe de rotation (A 3), en direction de la deuxième articulation de bras oscillant (12).

5. Robot industriel selon l'une des revendications 1 à 4, dans lequel le bras oscillant (5) présente une deuxième articulation oscillante (12) qui est disposée à l'opposé d'une première articulation oscillante (11) du bras oscillant (5) présentant l'axe de rotation (A3) et qui, dans une position de base du robot industriel (1) dans laquelle la flèche de bras (6) est orientée avec son extension longitudinale à angle droit par rapport à l'extension longitudinale du bras oscillant (5), l'entraînement de flèche de bras (13) est disposé avec son arbre moteur (13a) sur la flèche de bras (6) en s'éloignant de l'axe de rotation (A 3), dans une direction s'éloignant de la deuxième articulation oscillante (12).

6. Robot industriel selon l'une des revendications précédentes, dans lequel le premier entraînement de membre de main (14) et le deuxième entraînement de membre de main (15) sont disposés avec leurs arbres de moteur (14a, 15a) respectifs situés dans le même plan sur la flèche de bras (6).

7. Robot industriel selon la revendication 6, dans lequel le premier entraînement de membre de main ( 14) et le deuxième entraînement de membre de main (15) sont bridés avec leurs arbres moteurs respectifs (14a, 15a) dans un plan situé sur la flèche de bras (6), qui s'étend parallèlement à l'axe de rotation (A3).

8. Robot industriel selon l'une des revendications précédentes, dans lequel l'arbre moteur (13a) de l'entraînement du bras (13) est couplé à un étage de pignons droits (17a, 17b) et/ou à un entraînement par courroie d'un engrenage (18) qui est réalisé pour déplacer la première articulation de bras (11) reliant de manière pivotante la flèche de bras (6) au bras oscillant (5).

9. Robot industriel selon l'une quelconque des revendications précédentes, dans lequel la flèche de bras (6) présente un troisième entraînement de membre de main (16), qui est orienté avec son arbre moteur (16a) parallèlement aux arbres moteurs (14a, 15a) du premier entraînement de membre de main (14) et du deuxième entraînement de membre de main (15) et qui est disposé avec son boîtier d'entraînement en décalage vers l'avant par rapport aux boîtiers d'entraînement du premier entraînement de membre de main (14) et du deuxième entraînement de membre de main (15) en direction d'une main de la flèche de bras (6) sur ou dans la flèche de bras (6).

10. Robot industriel selon l'une des revendications précédentes, dans lequel l'entraînement de flèche de bras (13) est réalisé et/ou disposé sur la flèche de bras (6) de telle sorte qu'une extrémité frontale axiale (19) de l'entraînement de flèche de bras (13), opposée à la sortie de l'arbre moteur, fait saillie dans la direction axiale de l'axe de rotation (A3) de la première articulation oscillante (11) du bras oscillant (5) moins loin que l'entraînement extérieur des deux entraînements disposés l'un à côté de l'autre, à savoir du premier entraînement du membre à main (14) et/ou du deuxième entraînement du membre de main (15).
